# EUROPEAN PATENT APPLICATION

(11) **EP 2 679 793 A1**
(43) Date of publication of application: **01.01.2014**
(21) Application number: 12004856.6
(22) Date of filing: 28.06.2012
(51) Int. Cl.: F02K 1/82, F15D 1/00, F01D 25/24

(54) **Flow channel for a gaseous medium and corresponding exhaust-gas liner of a gas turbine**

(71) Applicant: Alstom Technology Ltd, 5400 Baden (CH)
(72) Inventor: Steffen, Tobias, 8954 Geroldswill (CH); Rauch, Marc, 8105 Regensdorf (CH)

(57) **Abstract**

The invention refers to a flow channel for a gaseous medium, especially a hot exhaust gas of a gas turbine, with improved aerodynamic characteristics.

In such a flow channel, a constructionally simple and effective reduction of unwanted flow separations is achieved, even in the event of changing flow parameters, by its flow-guiding contours (12, 14, 17) being equipped with an array of dimples (18).

A flow channel and an exhaust-gas liner of a gas turbine are provided.

## Description

### TECHNICAL FIELD

The present invention relates to the field of turbomachines. It refers to a flow channel for a gaseous medium, especially to an exhaust-gas liner of a gas turbine, according to the preamble of claim 1.

### BACKGROUND OF THE INVENTION

Gas turbine plants have an exhaust-gas liner, connected downstream to the turbine, which receives the expanded hot exhaust gas, which performs work in the turbine, and feeds it via a diffuser to a plant for further utilization of the residual heat contained in the exhaust gas, especially to a regenerative steam generator. The exhaust-gas liner accommodates an annularly designed flow channel for the hot exhaust gases, which is delimited by an annular inner casing with an inner liner and an annular outer casing which is arranged concentrically to the inner casing having an outer liner. By means of a number of support struts, penetrating the flow channel and distributed uniformly over its circumference, the inner casing and outer casing are fixed at an established distance from each other. In order to protect the support struts against the high thermal and corrosive stresses, they have a lining consisting of a material which withstands the thermal and chemical demands which prevail in the flow channel.

In the interest of high efficiency of the gas turbine, it is necessary to minimize as far as possible the pressure losses inside the exhaust-gas channel. For this reason, the inner and outer delimiting walls of the exhaust-gas channel have a contour of flow-advantageous design. The lining of the support struts has a flow-optimized profile, especially an airfoil profile.

The exhaust-gas channel including all built-in components are normally designed for the flow parameters which prevail during base load operation of the gas turbine. Since, however, depending upon the load state of the gas turbine, the flow conditions inside the exhaust-gas channel change, this has the result that in the case of load states which deviate from the base load operation, for example in the part load range, the flow conditions inside the exhaust-gas channel depart from the optimum range. In particular, the disadvantageous effect in this case is that the inflow angle of the hot exhaust gases into the exhaust-gas liner, and therefore their impingement angle upon the support struts, can change to a considerable extent. Consequently, loss-causing separation phenomena and subsequent turbulences on the delimiting walls, but especially in the region of the support struts, can come about. These losses undesirably lower the efficiency of the gas turbine.

### SUMMARY OF THE INVENTION

It is therefore an object of the invention to provide a flow channel for a gaseous medium with improved aerodynamic characteristics, especially an exhaust-gas liner of a gas turbine, which avoids the aforesaid disadvantages of known flow channels and which is characterized by a constructionally simple and effective reduction of unwanted flow separations, even in the event of changing flow parameters.

The object is achieved by the sum total of the features of claim 1.

The invention is based on a flow channel for a gaseous medium, especially an exhaust-gas liner of a gas turbine, at least comprising a radially inner casing with an inner liner, a radially outer casing at a distance from the inner casing with an outer liner, and a number of support struts for the mutual coaxial fixing of the inner casing and the outer casing, leaving free an annular flow channel for the gaseous medium, wherein at least a section of the flow-guiding contours is equipped with means for improving their aerodynamic characteristics.

According to a preferred embodiment type, an array of dimples is impressed into the flow-guiding contours.

In this case, it has proved to be advantageous to form the dimples as a spherical segment, that is to say in the shape of a cup.

The depth of the cup-shaped dimples is advantageously limited to less than half their diameter.

One embodiment of the invention is characterized by the fact that at least the surfaces of the support-strut lining are equipped with an array of dimples.

According to an alternative embodiment the flow-guiding contours in their entirety are equipped with an array of dimples.

The distance (a,b) between adjacent dimples within the array lies in a range of between zero and five-times their diameter (d), with 1 d ≤ a,b ≤ 3 d preferably being applicable.

The key advantages of the invention are especially to be seen in the fact that the risk of flow separations, especially in the region of the support struts, is significantly reduced. Therefore, flow separations are either completely avoided, or at least the region of the separated flow is relocated further downstream, by the flow vortices which develop in the dimples promoting attachment of the main flow to the channel contours.

Furthermore, the invention has the advantage of increased rigidity of the channel walls which are equipped according to the invention. This allows, for example, the use of liners with smaller wall thickness and therefore contributes to a saving in material of the plant. Also, thinner liners make their shaping easier by means of forming processes.

Finally, one advantage - which is not to be underestimated - of the channel walls which are equipped according to the invention, also lies in the fact that the susceptibility to vibrations of the liners is significantly reduced.

The invention can be used with new gas turbine plants. Furthermore, however, already existing exhaust-gas liners can also be retrofitted at little cost with the solution according to the invention.

### BRIEF DESCRIPTION OF THE FIGURES

The invention shall subsequently be explained in more detail based on exemplary embodiments in conjunction with the drawing. In the drawing
- Fig. 1: shows in a perspective view a detail of an exhaust-gas liner of a gas turbine according to an exemplary embodiment of the invention,
- Fig. 2: shows a plan view of a surface detail of a liner metal sheet formed according to the invention according to Fig. 1,
- Fig. 3: shows a sectional view of a support-strut lining according to A - A in Fig. 2,
- Fig. 4: shows a section through a first embodiment type of dimples according to the invention,
- Fig. 5: shows a section through a second embodiment type of dimples according to the invention.

### DETAILED DESCRIPTION OF EXEMPLARY EMBODIMENTS

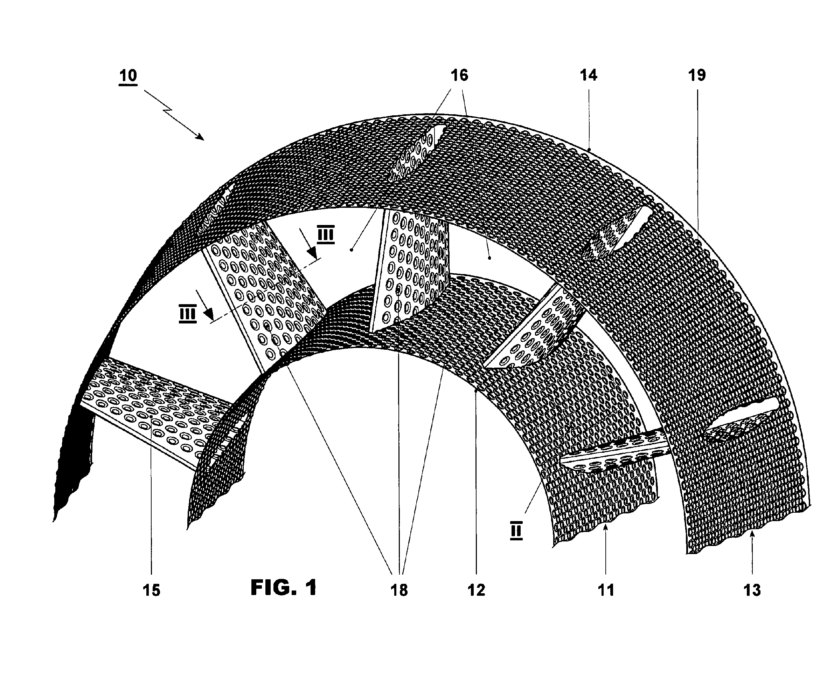

Fig. 1 shows in a perspective partial view an exhaust-gas liner (10) of a gas turbine plant. Not shown are the gas turbine, which is connected upstream to the exhaust-gas liner (10), and the downstream exhaust-gas diffuser, in which some of the inherent kinetic energy of the gas flow is recuperated.

The exhaust-gas liner (10) comprises an inner annular casing (11), having an inner liner (12), a radially outer casing (13), at a distance from the inner annular casing (11) and having an outer liner (14), and a number of support struts (15), distributed uniformly over the circumference, for the mutual coaxial fixing of the radially inner casing (11) and the radially outer casing (13), leaving free an annular flow channel (16), which is delimited by the inner liner (12) and the outer liner (14), for the hot gas. In addition to their supporting function, the support struts (15) also have a flow-guiding function and serve for straightening the hot gas flow (20) which enters the exhaust-gas liner (10) at a temperature of 600°C to 650°C and at supersonic speed. The support struts (15) therefore have a sheet metal lining (17) with a flow-optimized profile. Its design is customarily based on the flow parameters during base load operation of the gas turbine.

Flow losses in this region have a crucial effect upon the efficiency of the entire exhaust-gas diffuser.

Since depending upon the load state of the gas turbine different flow parameters (Reynolds number, inflow angle and inflow velocity, mass flow) prevail inside the exhaust-gas liner, changes of the mode of operation of the turbine, especially a change of its load state, bring about changes of the flow parameters, which lead to separation phenomena of the hot gas flow (20) from the wall (17). The significant development of turbulence in the regions with separated flow has a loss effect upon the recuperable kinetic energy in the exhaust-gas diffuser.

Fig. 1 shows the essential elements of an exhaust-gas liner (10), applying the measures which are proposed according to the invention for preventing flow separation or for at least relocating it downstream. For improving its aerodynamic characteristics, an array of circular dimples (18), covering an extensive area, is impressed into the surfaces of the liners (12, 14, 17) facing the hot gas channel (16). The dimples (18) all have the same shape and size. The latter, however, is not compulsory. If the conditions of the individual case require, the dimensioning of the dimples (18) or the dimple array can be altered continuously or in steps corresponding to the requirements.

Since the lining elements (12, 14, 17) inside the exhaust-gas liner (10) are customarily metal sheets of several millimeters in wall thickness, for example wall thicknesses in the range of between 6mm and 8mm, the dimples (18) can advantageously be impressed during the deep-drawing process of the metal sheet segments (12, 14, 17). As can also be seen in Figure 1, in liner segments (12, 14, 17), produced in such a way, the dimples (18) on the rear side of the metal sheet protrude as bumps (19). In application cases with more solid wall elements, alternative methods of producing the dimples (18), especially metal-cutting methods, may be used.

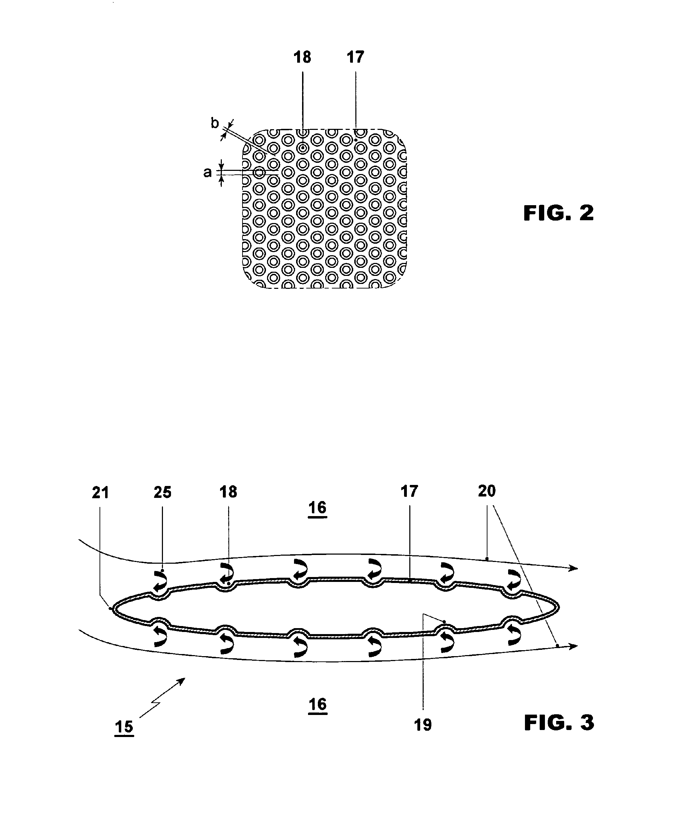

The dimples (18) can form different patterns on the surface. In principle, they can be arranged periodically or in random order. In the interests of foreseeable fluidic effects and continuity in the mechanical properties of the lining elements (12, 14, 17) of the flow channel, preference is to be given, however, to a periodic pattern, as is reproduced, for example, in Fig. 2 in the form of rows of dimples (18) of equal dimension which are arranged in a staggered manner.

Fig. 3 schematically shows a sectional view through a support-strut lining (17) with an outer contour of flow-advantageous design. The hot gas flow (20) which issues from the low-pressure turbine impinges at an angle of up to 45° upon the leading edge (21) of the support-strut lining (17) and is deflected in the direction of the plant axis (not shown). The main flow (20) induces the development of vortices (25) in the dimples (18), which aerodynamically bring about attachment of the flow and counteract flow separation.

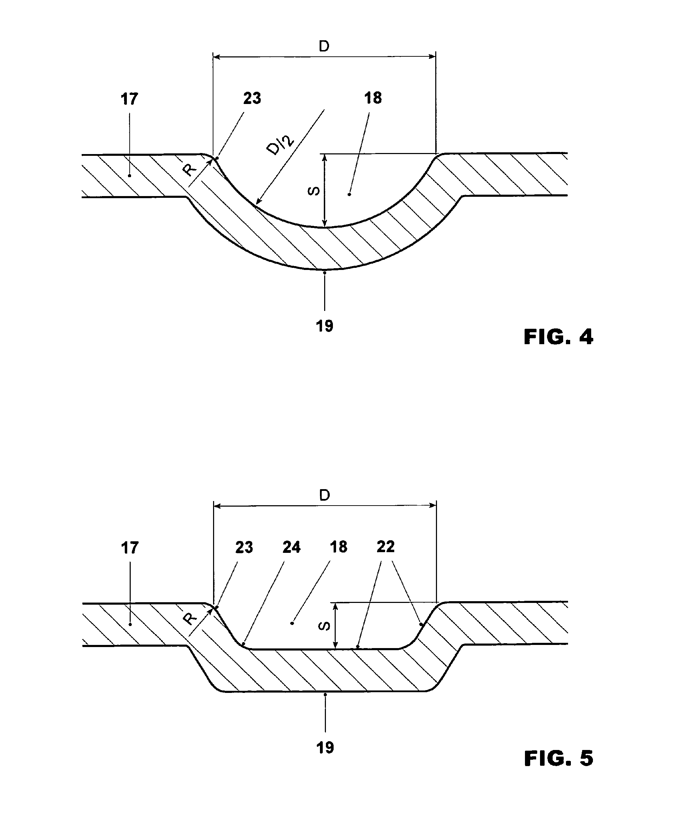

As already mentioned elsewhere, the dimples (18) are preferably formed as spherical segments, that is to say in the shape of a cup. Such an embodiment type is reproduced in Fig. 4 in a sectional view. The dimples (18) which are impressed into the liners (12, 14, 17) have a diameter (d) and a depth (s) with the proviso that s ≤ d/2. Preferably, the flow-guiding contours (12, 14, 17) are equipped with arrays of dimples (18), the depth of which is s ≤ d/4. The distances (a,b) between adjacent dimples (18) inside an array are not to exceed five-times their diameter, that is to say are to follow the inequation 0 ≤ a,b ≤ 5 d. The preferred order of magnitude of the distance (a,b) lies with the range of 1 d ≤ a,b ≤ 3 d.

Naturally, shapes which deviate from the cup shape are also possible, for example polygon-like structures in the form of straight surface sections (22) following one after the other, as is shown in the sectional view of Fig. 5. In particular, this embodiment is distinguished by a flat bottom surface (22) and straight side sections (22).

Since the exhaust-gas channel of a gas turbine is exposed to high thermal stresses, the dimples (18), in the interests of reducing the risk of stress crack development, have a tangentially constant progression. In the case of the impressing of dimples (18) of cup-shaped design, this means that their peripheral edges (23) are rounded. This premise applies all the more so to the alternative dimples (18) which are of polygon-like design. In addition to the peripheral edges (23), in this alternative embodiment the transitions (24) between the differently inclined straight surface sections (22) are also rounded.

### LIST OF DESIGNATIONS

- 10: Exhaust-gas liner
- 11: Inner casing
- 12: Inner delimiting wall, inner liner
- 13: Outer casing
- 14: Outer delimiting wall, outer liner
- 15: Support strut
- 16: Flow channel
- 17: Lining element of (15)
- 18: Dimple
- 19: Bump on rear side of the liners (12, 14, 17)
- 20: Hot gas flow
- 21: Leading edge of (15)
- 22: Straight surface sections of (18)
- 23: Peripheral edge
- 24: Transition radius
- 25: Vortex
- a, b: Distance between adjacent dimples (18)
- d: Diameter of a dimple (18)
- s: Depth of a dimple (18)

## Claims

1. A flow channel for a gaseous medium, especially an exhaust-gas liner for a gas turbine, at least comprising a radially inner casing (11), having an inner liner (12), a radially outer casing (13), at a distance from the radially inner casing (11) and having an outer liner (14), and a number of support struts (15) with lining elements (17) for the mutual coaxial fixing of the radially inner casing (11) and the radially outer casing (13), leaving free an annular flow channel (16) - delimited by the inner liner (12) and the outer liner (14) - for the gaseous medium, wherein the flow-defining contours (12, 14, 17) are equipped with means for improving their aerodynamic characteristics, **characterized in that** an array of dimples (18) is impressed, at least in part, into the surfaces of the flow-defining contours (12, 14, 17) inside the flow channel (16).

2. The flow channel as claimed in claim 1, **characterized in that** the dimples (18) have a circular cross section.

3. The flow channel as claimed in claim 2, **characterized in that** the dimples (18) are of cup-shaped design.

4. The flow channel as claimed in claim 2 or 3, **characterized in that** the dimples (18) have an at least approximately circular cross section with a diameter (d) and a depth (s), wherein s ≤ d/2 applies.

5. The flow channel as claimed in claim 1, **characterized in that** the dimples (18) are of polygon-like design and have one or a plurality of straight surface sections (22).

6. The flow channel as claimed in one or more of the preceding claims, **characterized in that** the dimples (18) have a tangentially constant progression.

7. The flow channel as claimed in one or more of the preceding claims, **characterized in that** the peripheral edges (23) of the dimples (18) are rounded.

8. The flow channel as claimed in claim 5, **characterized in that** the transitions (24) between the straight surface sections (22) are rounded.

9. The flow channel as claimed in claim 1, **characterized in that** at least the surfaces of the support-strut lining elements (17) are provided with an array of dimples (18), covering an extensive area.

10. The flow channel as claimed in claim 9, **characterized in that** the flow-guiding contours (12, 14, 17) of the flow channel (16) are equipped by and large all over with an array of dimples (18).

11. The flow channel as claimed in claim 2, **characterized in that** adjacent dimples (18) have a diameter (d) and a distance (a,b), wherein 0 ≤ a,b ≤ 5 d applies.

12. The flow channel as claimed in claim 1, **characterized in that** the dimples (18) form a periodic array on the surfaces of the flow-guiding contours (12, 14, 17).

13. The flow channel as claimed in claim 12, **characterized in that** the surfaces of the flow-guiding contours (12, 14, 17) have a pattern consisting of rows of dimples (18) which are arranged in a mutually staggered manner in the flow direction.

14. The flow channel as claimed in claim 1, **characterized in that** all the dimples (18) are basically equally dimensioned.

15. An exhaust-gas liner of a gas turbine, **characterized in that** it is equipped with a flow channel as claimed in one of claims 1 to 14.
